# EUROPEAN PATENT APPLICATION

(11) **EP 1 343 286 A1**
(43) Date of publication of application: **10.09.2003**
(21) Application number: 02251495.4
(22) Date of filing: 04.03.2002
(51) Int. Cl.: H04L 29/06

(54) **Lightweight authentication of information**

(71) Applicant: BRITISH TELECOMMUNICATIONS public limited company, London EC1A 7AJ (GB)
(72) Inventor: The designation of the inventor has not yet been filed
(74) Representative: Nash, Roger William

(57) **Abstract**

An authentication method for linked data is provided, which does away with the conventional requirement for secure authentication of every item of data using public key encryption or Message Access Codes. A subscriber to an indexed event announcement channel can access a first item of information which contains pointers to other items of information in which the user might be interested. A hash value of the pointed-to information is also provided in addition to the pointers themselves. In order to provide for authentication of the pointed-to information, the user authenticates the first item of information using a secure heavyweight authentication technique, and then uses the hash values of the pointed-to information contained in the first item of information to authenticate the pointed-to information when the user accesses it.

## Description

### Technical Field

The present invention relates to the lightweight authentication of information, and in particular to the authentication of information which is arranged in an indexed, nested or otherwise linked form. In particular the invention presents a method and apparatus for authenticating information, and a method and apparatus for generating authenticable items of information.

### Background to the Invention and Prior Art

With the growth in the exchange of data via inter-connected computer networks, the age-old problems of how to ensure that information received over a network has not been tampered with en-route, or that it originated from the person who claimed to have sent it are of growing importance. In order to address these problems, a branch of cryptology known as "Authentication" has grown up, which deals with methods of authenticating received information to determine either the sender and/or that the information has not been tampered with en route. The principal methods of authentication already known in the art are described next.

There are several classic source authentication schemes for broadcast communication known in the art: i) the well-known classical public key encryption system; ii) the Message Authentication Codes (MACs) proposed by Canetti et al. in *Efficient and Secure Source Authentication for Multicast.* Author Perrig, Canetti et al; iii) the known TESLA scheme; and iv) the BIBA scheme. The first two methods mentioned above will be described in detail next, due to their relevance to the present invention.

For public encryption to provide source authentication for a broadcast channel we need to use an asymmetric algorithm. The concept of asymmetric security was introduced with public-key cryptography by Diffie and Hellman in the 1970's, but there is now evidence that the United Kingdom government had discovered asymmetric security earlier than this. There are several asymmetric algorithms suitable for this kind of operation: RSA, EIGamal and Rabin, and for use in authentication such algorithms are used to generate a digital signature of the information as follows.

Firstly, it is necessary for an information provider to generate a public and private key pair, as is known in the art. Any users who wish to obtain information from the information provider must obtain the provider's public key, and store it for later use in authenticating information.

To allow for authentication, when the information provider generates new information the provider (typically some sort of server) generates a digital signature for the information by computing a hash value for the information using a known hash function. The hash value is then encrypted with the provider's private key to provide the signature, and the signature is appended to the information.

To authenticate the information, a receiver who has received the information with the appended signature may decrypt the encrypted signature using the sender's public key, thus retrieving the original hash value. By then using the same hash function on the received information to generate a second hash value and comparing it to the decrypted hash value, it is possible to tell whether the data has been tampered with or corrupted in transmission. Furthermore, the ability to decrypt the encrypted received hash value using the sender's public key proves to the user that the value was probably encrypted by the sender.

Thus the use of digital signatures as described above provides for both non-repudiability by the sender, as well as authentication of the message.

Next we describe various further requirements for public key encryption.

*Key management and certificate distribution:-* Each sender of information needs to distribute to the receivers a certificate signed by an authentication server containing their public key. This means that each receiver has to store all the public keys of the senders. Verification. The user in order to check the authentication will use the correct public key and will verify the digital signature. This method provides good performance in terms of security and for this kind of application it is not required to use long key 128 bits (or 256 bits) could be sufficient.

*Performance:-* Speed of public encryption algorithm is slower than the normal Data Encryption Standard (DES) or with a hash function. In software a classic DES algorithm is approximately 100 times faster than RSA, furthermore classic hash function are faster than DES.

Public key encryption can also be applied to indexed or linked information (which forms the basis of the problem of the present invention, as will be apparent later). A basic index authentication scheme using public encryption proceeds as follows:
*(Terminology:* U is the recipient of the information to be authenticated; I_S is a server that generates information containing references to information produced by another I_S or other server (S); A_S is the authentication server that distributes the I_S public keys; and S is a server of original information finally referenced by an I_S.)
1. U decides which I_Ss it is interested in receiving information from. This can often be achieved by backward searching the information references to find out which I_S refers to the original information distributed by S (or to other I_Ss in the reference chain). For example, a client might search for web services which offer the same basic features, or index announcements which reference the same data feeds.
2. U sends a request to A_S asking for the certificates of I_Ss. The certificate contains the public keys of the servers that generate the indexes.
3. When U receives information from I_S they verify the digital signature using the public key of the I_S. If the digital signature is incorrect the messages is dropped.

Having described the known public key techniques, we will now describe Message Authentication Codes (MACs), mentioned earlier.

MACs are a different approach to achieve the authentication of a sender or a group of senders in IP multicast, it has been presented by Perrig, Canetti et al. in *[ibid].* In broadcast communications we have many different scenarios so it is difficult to sort out a unique solution for source authentication. MACs address this problem by allowing good performance in a scenario where we have a small group of senders and a large number of recipients. The use of MACs is summarised as follows.

In a single sender scenario each sender holds a set of N keys and attaches to each packet N MACs with each MAC computed with a different key. A MAC is a pseudorandom function that takes a secret key K and a message M and returns a value MAC(K,M). The property of this function is that a user that knows M and MAC has a negligible probability to generate the same MAC without knowing the key. Each receiver holds a subset of N keys and verifies the MAC using the keys that he holds. If the receiver is able to verify with his key the related subset of the MACs the packet is authenticated. The important drawback is represented by the coalition of bad users, but it is possible with an appropriate choice of the key subsets to avoid this kind of problem. The method could be easily extended for a many senders scenario using the same set of keys. However each sender will hold a different set of keys in order that no coalition of senders can forge a message. This goal is achieved differentiating the sequence of the keys in primary and secondary keys. Each secondary key is derived by the primary using a pseudorandom function, the primary key is hashed with the public identity of the sender. Each sender will receive from a secure third party a set of N secondary keys, while receivers held a subset of the primary keys. The receivers will be able using the pseudorandom function and the public identity of the senders to compute a subset of the primary keys. We notice that this method is probabilistic in that it is difficult for an attacker to forge the signature.

Having described the background art, we will now discuss the specific problem solved by the present invention in the context of the background art.

The problem addressed by the invention is the efficient authentication of information that is received as a composite of information originating from multiple sources. The composite information might be included together in a single package, or alternatively the information might be delivered as a graph of connected components that refer to other sub-components. For example, an e-mail might have previous e-mails included within the body of the top-level e-mail. Each e-mail within the top-level e-mail might include a number of other messages and so on. All of these components would then be delivered together. The alternative might be a series of web pages, or the linking of component web services where only the top level page or web service is initially retrieved, but then in the navigation of the information, or use of the web service, other components are accessed.

Traditionally two approaches have been taken to the problem. The first method involves authenticating only the top-level information, with the assumption that the provider of the top-level information is willing to vouch for the sub-components authenticity. This is typical of reading an e-mail that quotes from other e-mails. Only the last sender of the information has a signature attached that is verified by the use of public encryption (see previous art for a technical description).The other typical approach used more commonly in linked media or component services is to authenticate every component originating from a different server. Often this is because the server also wishes to authenticate the client requesting the information. The information is a collection of linked information, potentially originating from different servers. Additionally these messages are read by a large group of clients that do not necessarily share the same navigation root, but do both have requirements for authentication. A client starting to navigate the information from any point in the graph of information should be able to perform a satisfactory level of authentication.

The problem is also common to indexed message technologies such as the Generic Announcement Protocol, described in our earlier International patent application no. PCT/GB01/02681. In this technology, messages are used to inform about the existence of other messages, and are linked in a tree structure. The data messages are the leaves of the tree, while higher level messages are indexes that refer to the lower level messages (that may also be index messages themselves). These messages may originate from number of servers, and be received by a large number of clients. Depending upon which data, or leaf, messages a client is interested in, it may listen to a smaller number of index messages instead. However, not all clients will use the same root index for their needs, or even use indexes at all.

Clearly when the component information is in the form of referrals to other places (and, in the case of messages, times), there is a potential for impostors to offer the component information, regardless of how trustworthy the referrer is. Just authenticating the root information source is not good enough. Also, if we can start navigation at any point, then we must be able to authenticate every component as the root. However authenticating each and every component by the use of a heavyweight authentication method such as public encryption presents a significant problem in that it puts a high load on a large number of clients. Since the referrer has already previously been assured of the authenticity of the component source then it would seem that the clients are being forced to duplicate much of that effort.

### Summary Of The Invention

The present invention addresses the above problem by the provision of an authentication method where we can authenticate the root source for that individual client in a secure manner using a heavyweight authentication method, and then borrow upon the previous server-to-server authentication to enable a lightweight method of authentication for further client-server information navigation.

From a first aspect, the present invention provides an information authentication method comprising the steps of:
a) accessing a first item of information containing: link information referring to one or more further items of information; lightweight authentication data respectively relating to the or each further item of information; and heavyweight authentication data relating to the first item of information;
b) authenticating the first item of information using said heavyweight authentication data;
c) accessing at least one of the one or more further items of information; and
d) authenticating the accessed one or more further items of information using the lightweight authentication data received in the first item of information.
   The invention provides the advantage that computationally intensive heavyweight authentication need only be performed for the first item of information which is accessed, subsequent referenced items of information then only requiring lightweight authentication, which is not relatively computationally intensive. This distinction between the respective computational intensities of lightweight and heavyweight authentication is an important characteristic thereof, in that heavyweight authentication is more computationally intensive than lightweight authentication. A further characteristic is that heavyweight authentication would be considered more secure than lightweight authentication.
   Preferably, the first and further items of information form part of a linked graph of items of information, the linked graph comprising *x* layers of items of information, where *x* is a real number greater than 2, and wherein each item of information in layer *n*, where *n*<x, respectively contains: link information referring to one or more further items of information in layer *n* + *1*; and lightweight authentication data respectively relating to the or each of the referred items of information in layer *n*+ *1*; wherein step c) further comprises:
e) accessing at least one of the further items of information in the *n+ 1*th nested index layer using the link information from at least one of the items of information in the nth layer; and wherein step d) further comprises
f) authenticating the or each accessed items of information in the *n*+*1*th layer using the respective lightweight authentication data contained in the item of information in layer *n* which referred to the or each accessed items of information in the *n*+*1*th layer;
   the method further comprising:
g) iterating steps e) and f) setting *n*=*n*+*1* at the start of each iteration until *n*+*1*=*x*.

Such features allow the invention to be applied to a linked graph of information of any size, whilst retaining the advantage that only the item of information which is accessed first need be authenticated using heavy authentication.

Moreover, preferably each further item of information further contains heavyweight authentication data relating thereto, such that any item of information may be treated as the first item of information. This allows navigation of information to start from any point within the linked graph of information.

Furthermore, preferably each piece of lightweight authentication data is a hash value derived from a hash function which takes the respective item of information to which a particular piece of lightweight authentication data relates as an argument, and wherein the authentication step d) comprises computing the hash values of the or each of the items of information accessed at step c) using the hash function, and comparing said one or more computed hash values with the respective hash values represented by the lightweight authentication data. The use of a hash function as the lightweight authentication allows for minimal use of computational resources.

Preferably authentication is performed as late as possible after first determining whether the reference is of any value. Thus resources are not wasted authenticating references which are not navigated.

From a second aspect the invention also provides a method of generating authenticable items of information in a linked configuration, comprising the steps of:
a) accessing one or more items of information which are to be linked to;
b) generating lightweight authentication data specific to the one or more accessed items of information;
c) compiling a new item of information comprising: link information referring to the one or more accessed items of information; and the lightweight authentication data;
d) generating heavyweight authentication data relating to the new item of information; and
e) including the heavyweight authentication data as part of the new item of information.

The second aspect of the invention provides the advantage that an authentication structure can be constructed over any dispersed information, whereby authenticated indexes serve no purpose other than to locate and authenticate the discrete information.

Preferably, the items of information accessed at step a) are index messages received from one or more index message servers; and the new item of information is an index message to be transmitted from an index server. This has the advantage that the invention becomes particularly suited for use with event announcement technology, such as that provided by the Generic Announcement Protocol referenced previously.

From a third aspect the invention also provides an information authentication apparatus comprising:
a) information access means for accessing a first item of information containing: link information referring to one or more further items of information; lightweight authentication data respectively relating to the or each further item of information; and heavyweight authentication data relating to the first item of information; and for accessing at least one of the one or more further items of information;
b) heavyweight authentication means for authenticating the first item of information using said heavyweight authentication data; and
c) lightweight authentication means for authenticating the accessed one or more further items of information using the lightweight authentication data received in the first item of information.

Moreover, from a fourth aspect the invention provides an apparatus for generating authenticable items of information in a linked configuration, comprising:
a) information access means for accessing one or more items of information which are to be linked to;
b) lightweight authentication means for generating lightweight authentication data specific to the one or more accessed items of information;
c) an information compiler for compiling a new item of information comprising: link information referring to the one or more accessed items of information; and the lightweight authentication data; and
d) heavyweight authentication means for generating heavyweight authentication data relating to the new item of information;
and wherein the information compiler is further arranged to include the heavyweight authentication data as part of the new item of information.

In addition, from a fifth aspect, the invention provides a computer program comprising instructions which when executed on a computer cause the computer to perform the method of either of the first or second aspects.

Also, the invention may also provide a computer readable storage medium storing a computer program, according to the fifth aspect of the invention. The computer readable storage medium may be any magnetic, optical, magneto-optical, solid-state, or any other data storage medium capable of storing data representative of instructions for a computer.

Further features, aspects and advantages of the invention will be apparent from the accompanying claims.

### Brief Description of the Drawings

Further features and advantages of the present invention will become apparent from the following description of a preferred embodiment thereof, presented by way of example only, and by reference to the accompanying drawings, wherein like reference numerals refer to like parts, and in which:-
Figure 1 illustrates the normal flow of index messages using the Generic Announcement protocol of the prior art;
Figure 2 shows a possible attack scenario where an attacker has inserted a false message into the message stream;
Figure 3 illustrates the message format and compilation process provided by the preferred embodiment of the present invention;
Figure 4 is a block diagram showing the functional elements of an index server of the preferred embodiment of the invention;
Figure 5 is a flow diagram showing the steps performed by an index server of the preferred embodiment in generating a new index message;
Figure 6 is a block diagram showing the functional elements of a user computer of the preferred embodiment of the invention; and
Figure 7 is a flow diagram showing the steps performed by a user computer to authenticate an index message in the preferred embodiment of the invention.

### Description of the Preferred Embodiment

A preferred embodiment of the invention will now be described, which takes as its basis the indexed event messaging technology referred to herein as the Generic Announcement Protocol (GAP), and which is described in our earlier International Patent Application No. PCT/GB01/02681 referenced earlier. A brief description of the GAP architecture and operation is undertaken below, but for further details the intended reader is referred to our earlier application, the contents of which are incorporated herein by reference.

Next we introduce the Generic Announcement Protocol, and its security requirements concerning authentication. This information is then used as background to the next section which details how the present invention can be implemented for the Generic Announcement Protocol.

The Generic Announcement Protocol, or GAP, is a protocol for the efficient distribution of announcements across a multicast network. The Generic Announcement Protocol (GAP) consists of two types of announcements. The first type of announcement are those which are being listened for on behalf of a client application, and are termed secondary announcements. These secondary announcements are passed to the GAP communication layer by a higher level application server, and are eventually passed to interested client applications. The other class of announcements are termed primary announcements and contain a payload which is related to one or more secondary (application) announcements. GAP separates these primary announcements into index announcements and management announcements. Both index and management announcements are not destined for application client, but instead are used by the GAP software layer itself to configure how it listens for secondary or data announcements. In effect these primary announcements are used to configure the GAP software layer.

Individual GAP announcements are considered to be part of an ongoing series of announcements. This series of related announcements is identified by a common Announcement Thread ID (AThID), and is found in the announcement header. Typically the payload information in announcements with the same AThID will relate to the same item of data. For example they might be a series of updated tariffs for a particular service.

The announcement header also contains a version number (VN) that uniquely identifies announcements in a common thread. This version number serves a number of functions. As well as uniquely identifying an announcement, it also places the announcement in a time series and allows the detection of missing announcements.

The final part of the announcement header contains a GAP protocol version number and a number of flags that are available for GAP and higher level applications. One of these flags is used to indicate whether an announcement is a configuration announcement, and as such, should be dealt with differently to a data announcement.

Each announcement thread is transmitted to one or more multicast network address(es). A software component termed the GAP announcer handles the announcement of events to the multicast network, while another component called the GAP listener is responsible for picking up announcements from the multicast network. The GAP listener acts on behalf of client applications and monitors selected multicast groups for the required announcement threads. The GAP listener also maintains a list of available indexes over the announcement threads that it has been asked to watch. Whether the listener monitors the data announcement thread directly, or utilises one of these indexes, is intelligently decided upon by the listener. For example, one index that mostly relates to announcement threads in which the listener is interested is likely to be worthwhile to listen to. Another index that only relates to one announcement thread of interest and a lot of high announcement volume threads in which we have no interest may not be so useful. By using indexes, the GAP listener can reduce the volume of announcements that it needs to receive, and also release multicast group resources that it uses to listen to the event announcements until those event announcements actually happen.

The GAP listener also receives configuration announcements that control its behaviour. These configuration announcements inform the listener about changes to announcement threads and related information, including the thread multicast location and available indexes.

Having described the basic GAP architecture, listening behaviour in the Generic Announcement Protocol (GAP) is described next, whence the importance of the index authentication and how malicious index announcements could affect the performance of GAP will become apparent.

The listener's behaviour depends on the information that is received by the index channels. The following points describe a possible sequence of actions performed by a client that is listening to an index channel.

### 1. Listen to Index Channel.

A client listens to the index channel in order to know when a data announcement is going to be made on one of the application channels. The user continuously maintains the connection to this index channel in order to monitor the data traffic.

### 2. Check Index Header

The user filters all the indexes that do not have the expected Announcement Thread ID (AThID) and Version Number (VN). When an expected index announcement is received, the user will process the payload. The next expected index announcement would have the same index AThID with the VN incremented.

### 3. Check Index Payload

A user getting new index information will check which data announcement is changed by examining the index announcement payload. If the user application is interested in the new data announcement, then it will join the application channel to get the information.

### 4. Listen to Data Channel

The user joins this channel to get the correct data announcement. The user should be temporarily connected to this channel, and will leave after receiving the expected data announcement.

The listener does not have any method to trust the sender since the IP address of the sender could be spoofed, or the correct information could be modified by a malicious sender, or "hackers" could introduce a "bad" announcer. GAP is a multi-layered protocol in terms of channels (Index Channel and Data Channel), these two types of channel carry different kinds of information with different security requirements thus it could be interesting to have two different methods of authentication one for the data messages and the other one for index messages. For example, the data channel could be subject to heavyweight authentication only, whilst the index channel is subject to heavyweight or lightweight authentication as appropriate.

After having described a scenario without any kind of security we now introduce the authentication operation. The client is probably always connected to the index channel. However the client is not interested in all of the traffic carried by this channel and can just drop the unwanted index announcements. Only a selected group of the indexes is processed. This group will have the expected AThID and the correct VN. The user will then check the payload in order to see if it is interested in fetching any of the data announcements detailed in the index payload. In the positive case the receiver will join the data channel. Before sending the joining message the receiver will want to authenticate the index announcement. Therefore, in summary, the operations that the user will have to perform are: Listen Index Channel --> Check AThID --> Check VN --> Check Payload --> Index Authentication --> Join Data Channel These operations that a user has to perform are scheduled in terms of priority.

Listening to the index channel and checking the header and the payload are considered low cost operations. We suppose that the size of the index packet is limited or at least negligible compared to data packets. The authentication operation has been introduced before joining the data channel in order to avoid useless resource allocation into the network. We are therefore looking for a low cost authentication algorithm, which means that theoretically the resources of the users have not to be spent to verify the authenticity of the index packets. It is important to keep in consideration that the one of main purpose of the index messages authentication is to avoid useless join data channel operations. The solution to be provided by the invention is looking for a trade-off between a situation of strong authentication (each index announcement is authenticated) and no-authentication where the user will verify the authenticity of an index checking the data announcement. The parameters involved in this evaluation are the network resource cost and the latency time to join a new multicast channel. We keep in consideration that the generation and verification overhead for the authentication information should be compatible with the computational power of the receivers.

In order to fully demonstrate the necessity of the mechanism provided by the present invention, in the next paragraphs we analyse the effects of malicious index announcements sent during a GAP session.

The sending of a forged index by an attacker could generate different and majors issues in terms of multicast network resources and could disturb the performance of the user. From a GAP point of view the most important information carried by the index are the AThID, VN and the payload. An attacker that wants to send forged index announcement into a multicast network needs to know this information, otherwise index packets sent with an invalid AThID or VN could be dropped by the firewall or by the receiver filter. However we could notice that this kind of attack could create a Denial of Service (DoS) situation in terms of network bandwidth. Even if we do not describe specifically the DoS problem, we need to keep in consideration that since the user is always connected to the index channel a malicious traffic could delay authentic indexes. If index authentication would be achieved using method like TESLA *[Tesla: Multicast Authentication Transform.* Author: Perrig, Canetti, Briscoe, Tygar and D.X.Song] that have strict time requirement, this kind of attack could create some problems.

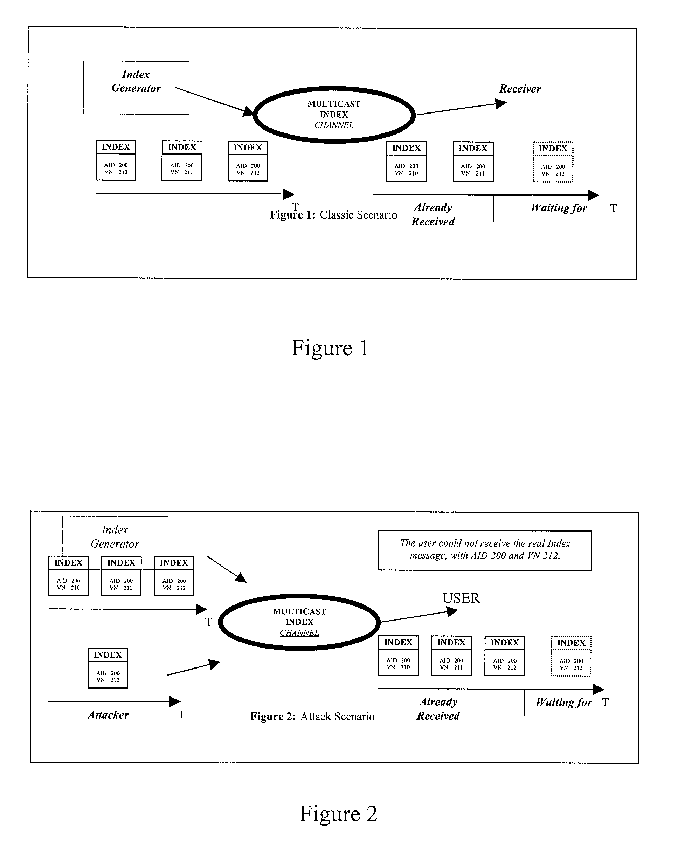

Figures 1 and 2 illustrate a situation where an attacker is sending forged index information with AThID, VN and payload compatible with the one expected by the listener. With forged header Information the AThID & VN would not be correct. A user listening to the index channel is going to take in consideration the index payload only if: i)The user is interested in the AThID; and ii)The VN of the AThID = = OLD_VN + 1 or VN > OLD_VN.

The classic scenario is shown in Fig. 1, where the index generator sends index announcements that are associated with a particular application channel. The receiver checks the header and the payload in order to know that something has changed in the data channel. We insert now into the classic scenario a malicious user that is going to send forged index packets and we analyse the effects from the receiver point of view (see Figure 2).

This attack affects the synchronization between the sender and receiver. In GAP there is no specification concerning synchronisation but it is evident that the user is always listening to the last version of the index announcement. A user, receiving forged index packets, could lose information concerning which index version it should listen for. The receiver, in order to rescue this situation, has to communicate with the index generator to re-synchronise the version number it is expecting. This is wasteful of resources and is a situation we wish to avoid in any implementation of GAP. However this attack does not seem an unbearable problem and using an authentication policy we could resolve it. It is not important to authenticate each index message as it would be sufficient to verify only announcements that ask the user to join the data channel.

It is interesting to notice that an index is intrinsically authenticated by the information that is carrying. The authentication of an index packet could be verified just checking the authenticity of the information sent into the index payload. In order to do that a user should check the authenticity of each data announcement (between two consecutive indexes only one data announcement should change). The most important drawback of this method is that a message requires time to be authenticated and network resources (to join the multicast channel). Consequently it is evident that the generation of forged indexes could act as a Denial of Service (DoS) attack.

Considering next a Forged Payload, this would be where an attacker includes in his forged index message incorrect data announcement information. An attacker sending a packet with a bogus payload would be able deliberately to create a dynamic change on the structure of the multicast tree. Each time that a new data announcement is indexed, the user will join a specified multicast tree to get it. In the actual multicast protocol a join operation costs in terms of bandwidth resources and computational operations. During a join operation at least three protocols could be used: IGMP protocol between the user and the first multicast router, an intra-domain protocol like PIM-SM and an inter-domain protocol like BGMP.

Considering next a Reply Attack, this would be where a malicious user repeats an old authentic announcement. This problem could be considered important in some special application where the same value of the index and data announcement is repeated. Even classic digital signature construction cannot solve this matter if the authentication parameters are not changed with the time. Usually [see *IP Security Document Roadmap.* Author R. Thayer et al] in order to solve this kind of problem a sequence number field is inserted into the packets, but in our case GAP already has this field in the form of the version number (VN). However in order to increase the security in our scheme and avoid this kind of problem during long time session we can add a nonce value that in this case is a timestamp information.

Having described the basic architecture of the preferred embodiment, we now describe the actual lightweight authentication technique provided by the present invention.

This new authentication technique exploits the hierarchical structure of GAP. The index structure of GAP can be seen as a tree. The root of the tree is a top-level super index and includes information regarding the sub-indexes. The present invention provides that a recipient listening to an index tree will have to authenticate only the parent index in order to have the entire group of children authenticated. If the receiver is listening the root index, he will be able with only one verification operation to authenticate the entire tree.

In order to better understand this structure we give a real example. A person receives an email that includes another email that as well contains another email and so on. Basically he is receiving nested emails. If the final recipient is able to authenticate the last sender it will be able to authenticate all the nested emails. The only hypothesis that is required is a trust relationship between the consecutive senders. This example is easily extended to GAP since the index structure is hierarchical and a user, that is able to verify the authentication of a root-index, could trust the authentication of entire tree structure. Technically the preferred embodiment of the invention provides that the recipient will verify the authentication of a super index using a public encryption or a MACs scheme, and then it will verify the sub-index with pseudorandom function (HASH).

In order to provide Nested Index Authentication as described above it is required to lightly modify the index design to introduce into the payload of the index announcement a new field carrying a pseudorandom function value of the index messages that is being indexed. Therefore, with this modification the new payload line for an index will be:
Index_Announcement Thread ID (AThID);
Version_Number;
H(H(lndex_Announcement)); and
Management Flag (MGT).

The properties of the hash function mean that is improbable (but not impossible to generate the same H(M) value with a different message M, but that given H(M) it is impossible to calculate M. In the preferred embodiment we use a double hash for security reasons, and the H(M) value is not disclosed until the first authenticated index announcement is sent.

Each index message also has an authentication field. The field contains a public encryption digital signature or a MACs sequence (both of which are generally known in the art). In this manner each index announcement can be verified even without listening to a higher level index announcement.

The technique provided by the present invention represents a good solution in order to solve the problem of resource allocation that affect users that have to check the authentication of too many indexes in a short intervals. The recipient will have only to verify a limited number of super-indexes, however we require that the generation of these indexes announcement be rate limited otherwise the resource problems are still possible. For particular kind of applications the authentication server could generate the super index with the purpose to improve the authentication performance of the system.

The scalability property is another strength of this method. It is not required that the user is listening to the root index, as a user could listen to any index in the tree and he could still perform the authentication and exploit the invention.

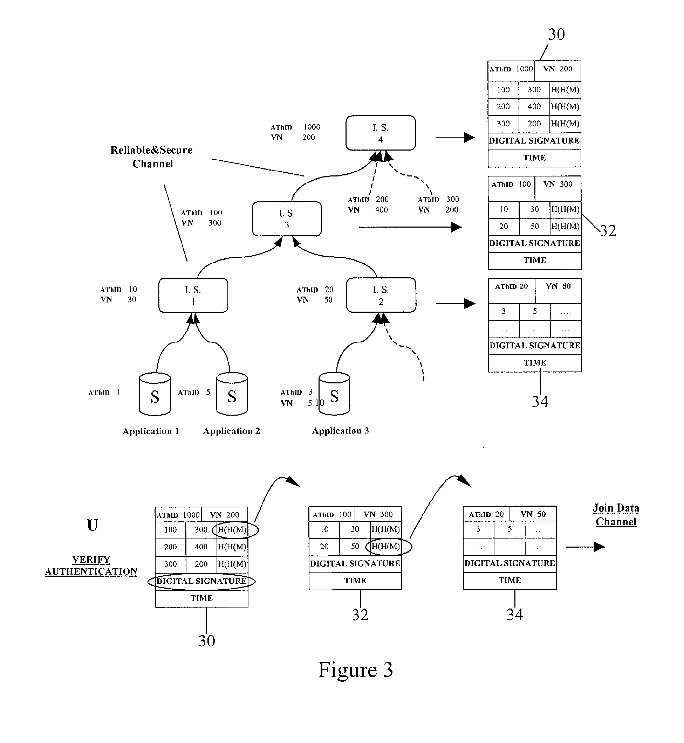

A more detailed description of the preferred embodiment of the invention will now be described with reference to Figures 3 to 7.

Figure 3 gives an overview of the operation of the preferred embodiment using GAP. Consider here application 3, which is generating event announcements with AThID = 3. The most recent event announcement is version number (VN) = 5, and this information is passed over a reliable and secure channel to index server (I.S.) 2.

The index server 2 the generates an index message 34, with AThID = 20 and VN = 50. The index message 34 contains as its payload the AThID and VN received from the application 3, and also includes a digital signature generated using a heavyweight authentication such as public key encryption, or Message Access Codes. The digital signature provides secure authentication to the index message 34 on its own, such that if a GAP listener receives only index message 34, it will be able to authenticate the message. In addition to the digital signature, a timestamp is also included.

The index server 2 transmits the index message 34 to a second index server 3 over a reliable and secure channel. The index server 3 also receives a further index message with announcement thread ID = 10 and version number = 30 from index server 1. Having received both these index messages from the index server 2, and the index server 1, the index server 3 then proceeds to compile a further index message 32 with announcement thread ID = 100, and the version number = 300. The index message 32 comprises in its payload the announcement thread ID and version number of the index message 34, and also of the index message received from the index server 1. In addition to these values, for each index message represented in the payload of the index message 32, the index server 3 calculates a double hash value of each received index message, and includes as part of the payload the calculated hash values. Therefore, a hash value H(H(M)) is computed by the index server 3 for the index message 34 received thereat, and this computed hash value is included as part of the payload of the index message 32.

In addition to the payload, the index message 32 also includes a digital signature generated using a heavyweight authentication procedure such as public key encryption, or message access codes. The digital signature provides secure authentication to the index message 32 on its own, such that if a listener were to receive only index message 32, it will be able to authenticate the message. In addition to the digital signature, a timestamp is also included.

The index server 3 transmits the index message 32 to a further index server 4 via a reliable and secure channel. The index server 4 represents, in this example, the root of the index tree and generates super index messages 30, which are intended to be listened to by all gap listeners using the system. The super index message 30 has announcement thread ID = 1000, and version number = 200. The super index message 30 carries as its payload the announcement thread ID's and version numbers of the index messages such as index message 32 which are communicated to the index server 4. In addition, for each index message represented in the payload a double hash value of that message is also included therein, such that the super index message 30 contains in its payload an announcement thread ID, a version number, and a hash value for each intermediate index message such as index message 32 which is represented therein.

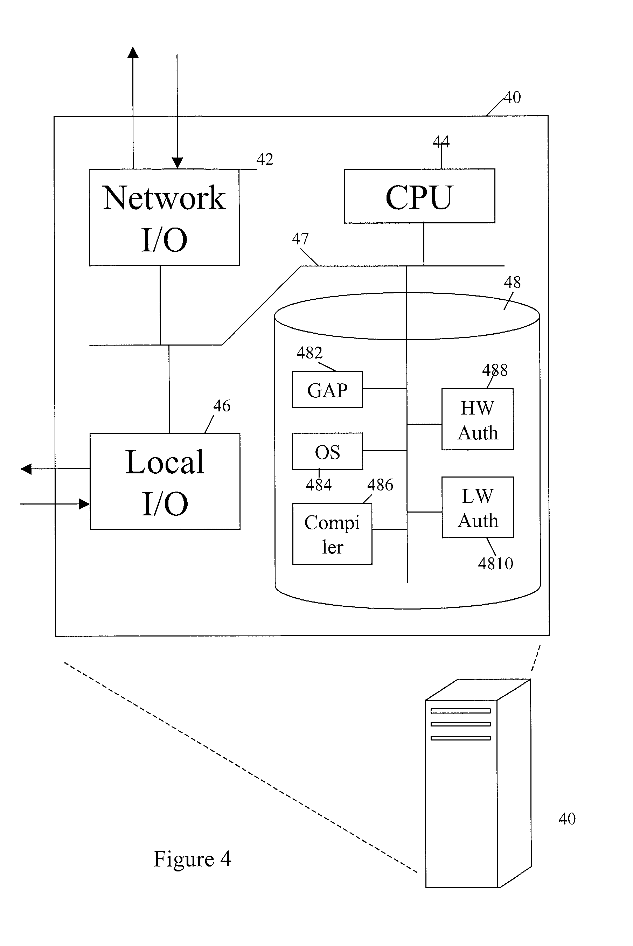

Figure 4 illustrates a block diagram of the internal functional elements of an index server 1, 2, 3, or 4. More particularly, an index server 40 that acts as an index server in the gap architecture is provided internally with a network card 42 to provide network interconnection to allow the index server to communicate with other index servers, applications or GAP listeners. A central processing unit 44 is further provided to control the operation of the server in accordance with one or more computer programs stored on an internal hard disk drive 48. A local input and output port 46 allows the server to communicate with its human operators via the usual input and output means such as monitors, keyboards, computer mouse, or the like. A data bus 47 is provided which allows for data and commands to be communicated between the different elements of the server 40.

The hard disk 48 stores thereon a number of computer programs, being in particular an operating suite of programs 484, a GAP layer program 482 which controls the functionality of the server to cause it to operate as a GAP index server. In addition, a compiler program 486 is provided which controls the server to generate index messages. Furthermore, a heavyweight authentication program 488 is provided which acts to provide for heavyweight authentication of messages, and in addition a lightweight authentication program 4810 is also provided, which acts to provide lightweight authentication using the hash functions as described.

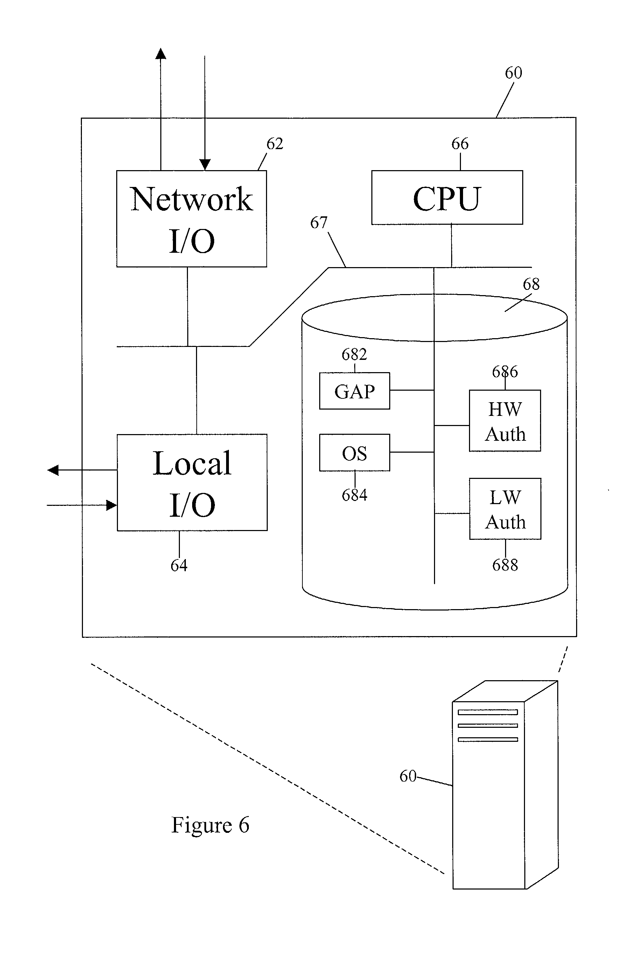

Figure 6 is a block diagram of the functional elements required at a user's computer in order to receive and authenticate the index messages generated by the index servers. More particularly, a user computer 60 comprises a network input and output card 62 which allows interconnection of the user computer 60 to a communications network to allow the user computer to communicate with the index servers. Local input and output means 64 are also provided to allow the human operator of the user computer to communicate therewith and in addition a central processing unit 66 is provided to control the operation of the user computer 60. A computer readable storage medium such as the hard disk 68 is further provided, upon which is stored a number of computer programs to control the operation of the user computer 60. A data bus 67 provides for data communications between the various elements.

The computer readable storage medium 68 stores a number of computer programs, including a suite of operating programs 684, and a GAP layer program 682 which controls the user computer 60 to perform the required GAP functions. In addition, a heavyweight authentication program 686 is provided which provides for heavyweight authentication of received index messages, and furthermore a lightweight authentication program 688 is also provided, to allow for lightweight authentication of received index messages. The specific details of operation of the heavyweight authentication program 686, and the lightweight authentication program 688 will be described later.

Having described the internal block structures of the index servers and the user computers, the method of operation of each will now be described with reference to Figures 3, 5, and 7.

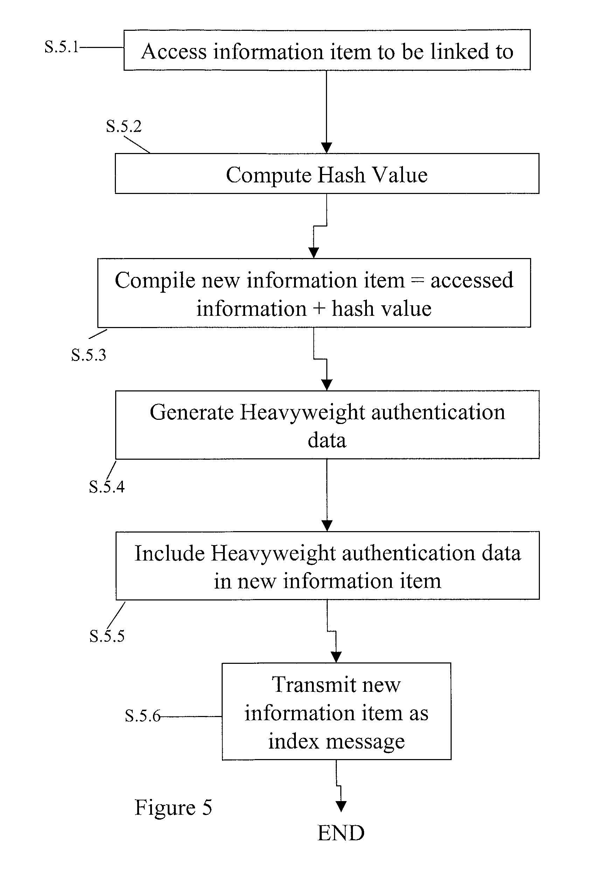

The operation of each index server was discussed previously with respect to Figure 3, but Figure 5 illustrates in flow diagram form the steps that are taken by any particular index server in generating an index message.

With reference to Figure 5, at step 5.1 the index server accesses the information item which is to be linked to in the index message to be generated by the index server. In the GAP architecture this step is fulfilled by the lower level application or index server sending to the index server is operation is being described either an event announcement, or an index message containing event announcements as its payload. That is, the information item in the GAP architecture is either the event announcement generated by an application or an index message generated by a lower level index server.

Having accessed the information item, at step 5.2 the index server computes the hash value of the accessed information item, using a known hash function. Preferably the hash function is applied two or more times to provide additional security. In the GAP architecture, the lower level index messages which are received at the index server with which we are concerned are used as the input to the hash function, such that the computed hash value represents the hash of the input index message.

Following the computation of the hash value, at step 5.3 the index server compiles a new information item containing pointers to the accessed information, plus the hash value which was computed at step 5.2. In the context of the GAP architecture, this step is fulfilled by the generation of a new index message of appropriate announcement thread identifier, but with an incremented version number which contains as its payload the announcement thread identifiers and version numbers of received lower level index messages, and in addition the computed hash values of those received lower level index messages.

At step 5.4, the compiled new index message is used as input to a heavyweight authentication function such as authentication using public key encryption to generate a digital signature, or by using message access codes. The use of public key encryption or message access codes for authentication is generally known in the art, but further details specific to the present invention will be described later.

Following the generation of the heavy weight authentication data for the new message, at step 5.5 the generated heavy weight authentication data is included as part of the compiled new index message (information item) as an additional field thereof. Furthermore, a timestamp is also included.

The above steps represent the steps taken by an index server to generate a new index message, and the process is completed at step 5.6 when the new information item in the form of the index message is transmitted.

It should be noted that the above steps are performed generally by any index server no matter where in the index tree the server lies. Thus whether the index server is generating the super index messages, intermediate index messages, or low level index messages, the procedure will be as described.

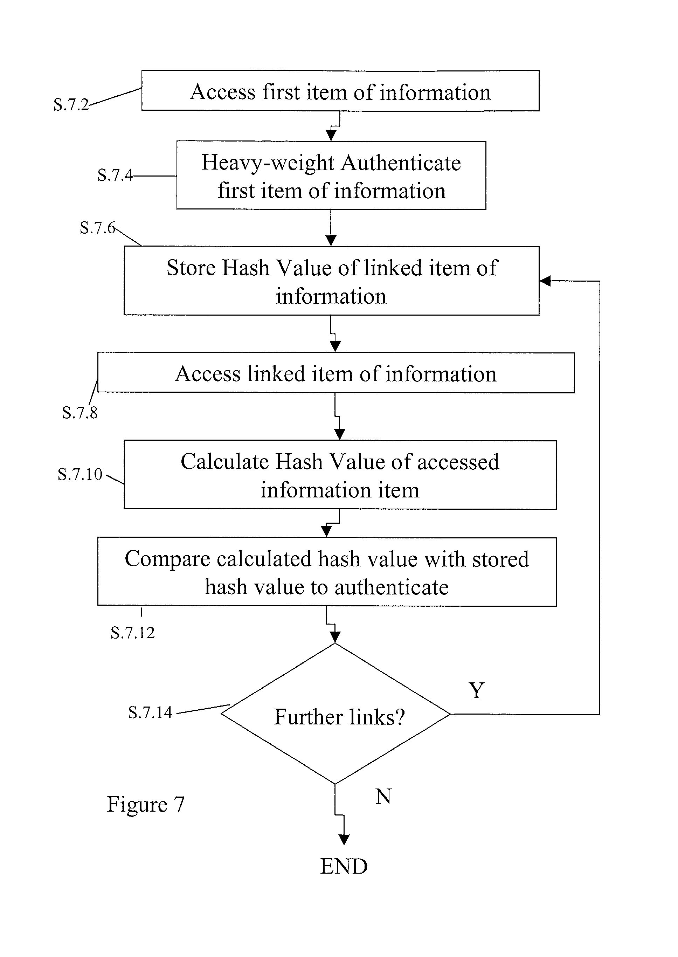

Having described the generation of index messages by the index servers, how the actual authentication is performed by users using the embodiment of the present invention will now describe with reference to Figures 3 and 7.

In an indexed or linked information environment such as the GAP architecture, each user will generally listen to a top level index message such as, in the GAP context, the super index messages 30. (Note, however, that although this may be typical, it is of course also open to users to listen to lower level index messages directly). Whether a user listens to the super index message 30 or a lower level index message first, in the present invention it is necessary for the user to authenticate the message or information item which is first listened to (and hence which is used as the effective route of the listeners index tree) using a secure authentication method such as provided by public key encryption or message access codes. Therefore, at step 7.2 a user computer first accesses an item of information, which in the context of the gap architecture will be listening to either the super index or another index message. Then, at step 7.4 the user computer will authenticate the received item of information or index message using heavyweight authentication such as public encryption or message access codes. Where public encryption is used, then the digital signature field of each index message will contain a digital signature generated using public key encryption. Alternatively, where message access codes are used then the digital signature field of each message will contain a series of message access codes as are known by themselves in the art.

Note here that preferably each index message or item of information generated by the index servers contains three additional control flags, being a flag to indicate whether the message is authenticable or not per se, a further flag to indicate whether it is authenticable using either a public key digital signature or message access codes, and finally a third control flag to indicate whether it is also authenticable in accordance with the lightweight authentication method of the present invention. These control flags in combination can tell the (GAP) listener what authentication method should be applied to a received index message.

Whatever heavyweight authentication method can be used at step 7.4 provided the lightweight authentication method provided by the present invention is being used for the received index message, at step 7.6 the hash value or values of the linked items of information or index messages linked in the accessed first item of information or (super) index message are stored. In the GAP architecture, the hash values of lower level index messages referenced in the first index message received are stored.

Next, if the (GAP) listener determines that it needs to access one of the linked items of information (such as a lower level index message in the GAP architecture), at step 7.8 the item of information or index message is accessed. Then in order to perform only lightweight authentication of that message or item of information, and borrow from the secure authentication which was obtained by use of the heavyweight authentication method at step 7.4, at step 7.10 the hash value of the accessed information item or index message is calculated, and at step 7.12 the calculated hash value is compared with the stored hash value which was taken from the first received index message or item of information which was subject to the heavyweight authentication. By comparing the hash value calculated at step 7.10 and the hash value which was retrieved from the securely authenticated index message or item of information, it is possible to tell whether the item of information or index message accessed at 7.8 is authentic, by effectively "borrowing" security from the item of information or index message which was securely authenticated using the heavyweight authentication method but which pointed to the newly accessed item of information or index message and also contained a hash value of the pointed to item of information or message therein. If the hash value calculated from the actual item of information or index message which was accessed at step 7.8 is not equal to the hash value which was retrieved from the securely authenticated index message or item of information, then the accessed item of information or index message is discarded.

The above steps 7.2 to 7.12 essentially describe how a single item of information or index message one layer down from a first item of information or index message which was securely authenticated can borrow from the secure authentication thereof. However, the present invention also provides for the secure authentication provided by the heavyweight authentication method of step 7.4 to be passed further along the index tree to items of information or index messages which are further down the index tree. This is shown in the bottom part of Figure 3.

Here, the super index message 30 is securely authenticated using a heavyweight authentication method such as message access codes or public key encryption. The thus authenticated values therein, however, include hash values of the index messages that are referenced in the super index message 30, such as, for example the intermediate level index message 32. Thus, as already described, the intermediate level index message 32 can be authenticated by comparing a hash value computed of the message 32 when it is received with the hash value indicated in the super index message 30. However, the intermediate level index message 32 also itself references a low level index message 34, and also contains the hash value of that low level index message 34. Thus, when the low level index message 34 is accessed and retrieved it is possible for the user computer to calculate the hash value of the accessed message 34 and compare that computed value with the hash value contained in the intermediate level message 32, which was itself authenticated by reference to the super index message 30. In this way, the authentication of the super index message 30 provided by the heavyweight authentication method using public key encryption or the message access codes can be passed down the index tree from index message to index message (or more generally information item to information item) by reference to the hash values contained in each message of messages one layer below them in the tree. In effect, the heavyweight authentication of the super index message (or first accessed message or item of information) is "borrowed" by the intermediate and lower level index messages. It is the use of these hash values to effectively pass on the heavyweight authentication of the first (or super) index message which we term herein "lightweight authentication".

Returning to Figure 7, this ability to provide nested lightweight authentication can be provided by the provision of step 7.14, wherein following the lightweight authentication of the item of information or index message accessed at step 7.8, an evaluation is made to determine whether that item of information or index message itself contains further links to lower level items of information or index messages. If it does, then the message will also contain the hash values of the lower level items of information or index messages which are referenced therein, and hence processing returns back to step 7.6 wherein these hash valuess are stored. The referred to lower level items of information or index messages are then accessed at step 7.8, and the hash values of the accessed information items or index messages calculated at step 7.10. Lightweight authentication is then provided by comparing the calculated hash value with the hash values most recently stored at step 7.6, and if the hash values match then the message can be taken as authentic.

It should be understood that the above described iteration can be repeated as many times as required depending on how many layers there are in the index tree. In each iteration the heavyweight authentication provided for the item of information or index message which was first accessed is been effectively passed onwards down the index tree.

The above describes how the lightweight authentication of the present invention is performed, by effectively "borrowing" the heavyweight authentication of the item of information or index message which is first accessed. We mentioned previously that the heavyweight authentication is envisaged as being performed using public key encryption to generate a digital signature or using message access codes. Whilst these two authentication methods themselves are known per se in the art, further details of their application to the embodiment of the present invention are given next.

Authentication using digital signatures generated using public key encryption is well known in the art, and little further details will be given here. RSA is the favoured public encryption algorithm for use with the invention and is the de facto standard in much of the world. The RSA algorithm was patented in USA, the patent expired on September 20, 2000.

The use of digital signatures also requires the use of a One- Way Hash Function, and the preferred algorithm is MD4, a one way hash function designed by Ron Rivest. MD stands for message digest, the algorithm produces an output of 128bit. It is the fastest algorithms in terms of encryption speed, the last version MD5 improves MD4 but it is more complex and slower. Note that this hash function is also preferably used to compute the hash values required for lightweight authentication in the present invention.

Using digital signatures also requires an Authentication Server. This works like a database and distributes to the user the certificate containing the identity of the index generator and his public key. The certificate will be valid for a period of time. The user could access the certificate using a URL specified into the index announcement.

As an alternative to using public key cryptography, we mention also that Message Access Codes can also be used as the heavyweight authentication method, and further details of the use of MACs in the present embodiment are given below.

In the use of the Generic Announcement Protocol (GAP) we are interested in being able to authenticate index announcements that refer to other index announcements, and ultimately data announcements from various applications. Each index generator will have a sequence of N secondary key and each receiver interested in listening to the indexes produced by that generator will receive a subsets of the primary keys. The recipient's keys are distributed in a way that limits the probability that a coalition of users can know all the keys of a sender. When a listener wishes to authenticate index announcements they must connect to an authentication server that will distribute a subset of the primary keys. This method is interesting since it does not add complexity on the receiver side. The recipient, knowing a subset of primary keys, is able to check the authentication of each index announcement using always the same keys. In terms of computational resource a recipient that has to verify the authenticity of an index announcement, has to execute a hash function for each key that he knows. However if the verification process becomes too expensive the authentication of a message could be evaluated with small subsets of the primary key (less pseudorandom function computation required). This is acceptable since an index is intrinsically authenticated by being referenced by a previously authenticated index, or by referencing, ultimately, a data announcement which is authenticated. The basic index authentication scheme proceeds as follows:
Terminology:
R'= <K'1, K'2, K'3, ..., K'N> Set of Primary Keys, R"I_S= < H(K'1, I_S), H(K'2, I_S), ...., H(K'N, I_S)> Set of Secondary Keys;
I_S the server that generates the index announcement knows a set of N secondary keys R"I_S;
A_S the authentication server knows and distributes a set of R' and R"I_S;
S server that initiates the session; and
U the recipient knows a subset of the N primary keys R'u Ì R'.

U sends a request to server S for information and receives in reply data and index information with a unicast message sent by server S. U then joins the index channel and further sends a request to A_S asking for the subset of primary keys R'u Ì R'. This subset is distributed using a secure channel. Next, I_S sends messages authenticated using MAC function. A messages is accompanied with <MAC (K"1, M), MAC(K"2, M), MAC( K"3, M), ...., MAC(K"N, M)>. When U receives an index announcement he verifies all the MACs created using the keys in his subset.

The MACs method that has been described above could reduce the running time of the authentication operation. The running time for the authenticator is reduced dramatically, the running time of the verifier is comparable with the public key signature. However in some particular case the verification could be ran using a restricted subset of key in order to improve the performance.

Considering the communication overhead the two algorithms have similar performance. For the MACs we use hash function using only 1 bit out of each MACs. Considering the public encryption signature a requirement is that each receiver should store the public key of each source. The key certificate is not sent with the message announcement otherwise the length of the message is increased. In each packet a field (URL or IP address) that points to the authentication server has been added. Both solutions require the distribution of public key or primary keys, that we provide using the Authentication Server (A.S.) This key distribution is often a security matter in terms of key management a similar problem is the development of the Public Key Infrastructure (PKI). The lightweight authentication technique of the present invention also partially solves this problem, by minimising the numbers of sets of keys (in the case of MACs) or public keys (in the case of public key encryption) which have to be distributed.

The above described embodiment has described the application of the invention to an index-based event announcement architecture such as GAP, but it should be understood that the invention is not limited to such a use, and can be used in any system where secure heavyweight authentication is required first, which authentication can then be passed on to linked items of data via a relatively less secure lightweight authentication method. As an example of a further system, in another embodiment providing for group communications, an authentication server (equivalent in structure and function to an index server of the first embodiment) may distribute authentication messages to a group of users, which authentication messages are capable of heavyweight authentication but which also allow access to actual data messages which are then authenticated in the lightweight manner of the present invention.

## Claims

1. An information authentication method comprising the steps of:
a) accessing a first item of information containing: link information referring to one or more further items of information; lightweight authentication data respectively relating to the or each further item of information; and heavyweight authentication data relating to the first item of information;
b) authenticating the first item of information using said heavyweight authentication data;
c) accessing at least one of the one or more further items of information; and
d) authenticating the accessed one or more further items of information using the lightweight authentication data received in the first item of information.

2. A method according to claim 1, wherein the first and further items of information form part of a linked graph of items of information, the linked graph comprising x layers of items of information, where *x* is a real number greater than 2, and wherein each item of information in layer *n*, where *n*<*x*, respectively contains: link information referring to one or more further items of information in layer *n+1;* and lightweight authentication data respectively relating to the or each of the referred items of information in layer *n+1;* wherein step c) further comprises:
e) accessing at least one of the further items of information in the *n*+*1*th nested index layer using the link information from at least one of the items of information in the nth layer; and wherein step d) further comprises
f) authenticating the or each accessed items of information in the *n*+*1*th layer using the respective lightweight authentication data contained in the item of information in layer *n* which referred to the or each accessed items of information in the *n*+*1*th layer;
the method further comprising:
g) iterating steps e) and f) setting *n*=*n*+*1* at the start of each iteration until *n*+*1*=*x*.

3. A method according to claims 1 and 2, wherein each further item of information further contains heavyweight authentication data relating thereto, such that any item of information may be treated as the first item of information.

4. A method according to any of the preceding claims, wherein each piece of lightweight authentication data is a hash value derived from a hash function which takes the respective item of information to which a particular piece of lightweight authentication data relates as an argument, and wherein the authentication step d) comprises computing the hash values of the or each of the items of information accessed at step c) using the hash function, and comparing said one or more computed hash values with the respective hash values represented by the lightweight authentication data.

5. A method according to claim 4, wherein the hash function comprises a one-way function applied one or more times.

6. A method according to any of the preceding claims, wherein the heavyweight authentication data is a digital signature generated using public key cryptography.

7. A method according to any of claims 1 to 5, wherein the heavyweight authentication data comprises a plurality of signature values each generated using a pseudorandom function which takes as its arguments the item of information to which the data relates and a respectively different key for each signature value.

8. A method according to any of the preceding claims, wherein the items of information are index messages transmitted from one or more index message servers.

9. A method of generating authenticable items of information in a linked configuration, comprising the steps of:
a) accessing one or more items of information which are to be linked to;
b) generating lightweight authentication data specific to the one or more accessed items of information;
c) compiling a new item of information comprising: link information referring to the one or more accessed items of information; and the lightweight authentication data;
d) generating heavyweight authentication data relating to the new item of information; and
e) including the heavyweight authentication data as part of the new item of information.

10. A method according to claim 9, wherein each piece of lightweight authentication data is a hash value derived from a hash function which takes the accessed item of information to which a particular piece of lightweight authentication data relates as an argument, and wherein the generating step b) comprises computing the hash values using the hash function of the or each of the items of information accessed at step c).

11. A method according to claim 10, wherein the hash function comprises a one-way function applied one or more times.

12. A method according to any of claims 9 to 11, wherein the heavyweight authentication data is a digital signature generated using public key cryptography.

13. A method according to any of claims 9 to 11, wherein the heavyweight authentication data comprises a plurality of signature values each generated using a pseudorandom function which takes as its arguments the item of information to which the data relates and a respectively different key for each signature value.

14. A method according to any of claims 9 to 13, wherein the items of information accessed at step a) are index messages received from one or more index message servers; and the new item of information is an index message to be transmitted from an index server.

15. An information authentication apparatus comprising:
a) information access means for accessing a first item of information containing: link information referring to one or more further items of information; lightweight authentication data respectively relating to the or each further item of information; and heavyweight authentication data relating to the first item of information; and for accessing at least one of the one or more further items of information;
b) heavyweight authentication means for authenticating the first item of information using said heavyweight authentication data; and
c) lightweight authentication means for authenticating the accessed one or more further items of information using the lightweight authentication data received in the first item of information.

16. An apparatus according to claim 15, wherein the first and further items of information form part of a linked graph of items of information, the linked graph comprising *x* layers of items of information, where *x* is a real number greater than 2, and wherein each item of information in layer *n*, where *n*<*x*, respectively contains: link information referring to one or more further items of information in layer *n*+*1*; and lightweight authentication data respectively relating to the or each of the referred items of information in layer *n*+*1*; wherein the information access means is further arranged to:
e) access at least one of the further items of information in the *n*+*1*th nested index layer using the link information from at least one of the items of information in the *n*th layer; and wherein the lightweight authentication means is further arranged to:
f) authenticate the or each accessed items of information in the *n*+*1*th layer using the respective lightweight authentication data contained in the item of information in layer *n* which referred to the or each accessed items of information in the *n*+*1*th layer;
the information access means and the lightweight authentication means being further arranged to:
g) iterate steps e) and f) setting *n*=*n*+*1* at the start of each iteration until *n*+*1*=*x*.

17. An apparatus according to claims 15 and 16, wherein each further item of information further contains heavyweight authentication data relating thereto, such that any item of information may be treated as the first item of information.

18. An apparatus according to any of claims 15 to 17, wherein each piece of lightweight authentication data is a hash value derived from a hash function which takes the respective item of information to which a particular piece of lightweight authentication data relates as an argument, and wherein the lightweight authentication means further comprises: hash computing means for computing the hash values using the hash function of the or each further items of information accessed by the information access means; and hash comparison means for comparing said one or more computed hash values with the respective hash values represented by the lightweight authentication data.

19. An apparatus according to claim 18, wherein the hash function comprises a one-way function applied one or more times.

20. An apparatus according to any of claims 15 to 19, wherein the heavyweight authentication data is a digital signature generated using public key cryptography.

21. An apparatus according to any of claims 15 to 19, wherein the heavyweight authentication data comprises a plurality of signature values each generated using a pseudorandom function which takes as its arguments the item of information to which the data relates and a respectively different key for each signature value.

22. An apparatus according to any of the preceding claims, wherein the items of information are index messages transmitted from one or more index message servers.

23. An apparatus for generating authenticable items of information in a linked configuration, comprising:
a) information access means for accessing one or more items of information which are to be linked to;
b) lightweight authentication means for generating lightweight authentication data specific to the one or more accessed items of information;
c) an information compiler for compiling a new item of information comprising: link information referring to the one or more accessed items of information; and the lightweight authentication data; and
d) heavyweight authentication means for generating heavyweight authentication data relating to the new item of information;
and wherein the information compiler is further arranged to include the heavyweight authentication data as part of the new item of information.

24. An apparatus according to claim 23, wherein each piece of lightweight authentication data is a hash value derived from a hash function which takes the accessed item of information to which a particular piece of lightweight authentication data relates as an argument, and wherein the lightweight authentication means is further arranged to compute the hash values of the or each of the items of information accessed by the information access means using the hash function.

25. An apparatus according to claim 24, wherein the hash function comprises a one-way function applied one or more times.

26. An apparatus according to any of claims 23 to 25, wherein the heavyweight authentication data is a digital signature generated using public key cryptography.

27. An apparatus according to any of claims 23 to 25, wherein the heavyweight authentication data comprises a plurality of signature values each generated using a pseudorandom function which takes as its arguments the item of information to which the data relates and a respectively different key for each signature value.

28. An apparatus according to any of claims 23 to 27, wherein the items of information accessed by the information access means are index messages received from one or more index message servers; and the new item of information is an index message to be transmitted from an index server.

29. A computer program comprising instructions which when executed on a computer cause the computer to operate in accordance with the method steps of any of claims 1 to 14.

30. A computer-readable storage medium storing a computer program according to claim 29.
